# EUROPÄISCHE PATENTSCHRIFT

(11) **EP 2 181 916 B1**
(45) Veröffentlichungstag und Bekanntmachung des Hinweises auf die Patenterteilung: **08.08.2012**
(21) Anmeldenummer: 09075484.7
(22) Anmeldetag: 29.10.2009
(51) Int. Cl.: B62J 6/00, B62K 21/26

(54) **Lenkergriffe mit integrierter Beleuchtung für Fahrräder**
Handlebar grip with integrated lighting for bicycles
Poignées de guidon dotées d'un éclairage intégré pour vélos

(30) Priorität: 29.10.2008 DE 202008014551 U
(43) Veröffentlichungstag der Anmeldung: 05.05.2010
(73) Patentinhaber: Boldt, Olaf, 14712 Rathenow (DE)
(72) Erfinder: Boldt, Olaf, 14712 Rathenow (DE)

(56) Entgegenhaltungen:
- CN-Y- 2 686 998
- DE-B- 1 111 969
- DE-U1- 9 301 227
- GB-A- 2 298 702

## Beschreibung

Die Erfindung betrifft ein Beleuchtungssystem für ein Fahrrad, umfassend ein Griffstück und einen Griffkopf, wobei das Griffstück auf den äußeren Endpositionen eines Lenkers aufgebracht ist und der Griffkopf mindestens eine schaltbare Beleuchtungseinheit umfasst. Die Erfindung betrifft weiterhin die Verwendung eines Beleuchtungssystems zur Beleuchtung eines Fahrrads.

Es verunglückten mehr als 77.000 Radfahrer im Jahre 2006 auf deutschen Straßen. Oft ist mangelnde Fahrradbeleuchtung die Ursache für Unfälle mit zum Teil tödlichem Ausgang. Die richtige Lichtausrüstung kann jedoch Leben retten. Für überholende oder kreuzende Kraftfahrzeuge ist es unter eingeschränkten Sichtverhältnissen und in der Dunkelheit sehr schwer, die gesamten Konturen eines Fahrrades zu erfassen und damit Distanzen als auch Geschwindigkeiten einzuschätzen. Besonders Kinder sind hier gefährdet.

Gerade in Bereichen, in denen Fahrräder keine separaten Fahrwege nutzen können, wird bei Überholvorgängen der Abstand zum Fahrrad oft unterschätzt. Grund ist in vielen Fällen die nicht ausreichende Beleuchtung an Fahrrädern. Es existiert für Fahrräder keine aktive Ausleuchtung zu den Seiten. Außerdem ist eine Kontrolle der Funktionsbereitschaft der hinteren Beleuchtungseinrichtung während der Fahrt nicht permanent gewährleistet.

Im Stand der Technik sind unterschiedliche Fahrradbeleuchtungen beschrieben, die eine adäquate Beleuchtung erreichen sollen.

Die bisherigen im Stand der Technik beschriebenen Beleuchtungsvorrichtungen für Fahrräder beschreiben Vorrichtungen, die einen vom Vorder- und/oder Hinterrad angetriebenen Seitendynamo oder Nabendynamo zur Generierung von Elektroenergie verwenden. Die Elektroenergie betreibt wiederum Scheinwerfer, die vorn und hinten am Fahrrad angebracht sind. Die Scheinwerfer sind mit einer elektrischen Verbindung, beispielsweise einem Draht, mit dem Dynamo verbunden.

Adaptionen der beschriebenen Dynamo-enthaltenen Beleuchtungsvorrichtungen umfassen aufladbare Batterien, wodurch auch bei langsamer Fahrt eine konstante Beleuchtung sichergestellt wird.
Nachteilig bei den Beleuchtungsvorrichtungen, die einen Seitendynamo enthalten ist, dass bei Nässe, Schnee oder verschmutzter Fahrbahn der Dynamo nicht ausreichend Haftung am Reifen findet und so nicht genügend Elektroenergie generiert wird. Es kommt zu Ausfall oder einer starken Verminderung der Leistungsfähigkeit des Dynamos, womit gerade bei Dunkelheit ein hohes Sicherheitsrisiko einhergeht.
Außerdem ist nachteilig, dass die Beleuchtungen ausschließlich an der Längsachse des Fahrrads befestigt sind und nur eine vordere und hintere Beleuchtung vorhanden sind. Es fehlen an Fahrrädern aktive, seitliche Begrenzungsleuchten, welche dem überholenden oder kreuzenden Verkehr die Erkennung eines Fahrrades in der Dunkelheit ermöglichen. Das Fahrrad kann zwar seitlich mit Reflektoren ausgestattet werden, jedoch erhöhen diese die Sichtbarkeit des Fahrrads nur minimal. Außerdem reflektieren die Reflektoren nur einfallendes Licht und besitzen keine eigene Leuchtkraft.

Ohne Beleuchtungseinrichtungen werden im Handel Sport- und Fitnessräder als auch Mountainbikes angeboten. Die für diese Räder nutzbaren batteriebetriebenen Beleuchtungseinheiten benötigen eine separate Halterung und diesbezüglich am Rad eine passende Montagemöglichkeit, welche oft nur begrenzt zur Verfügung steht. Diese nachträglichen Installationen sind oft sehr aufwendig und teilweise vom Kunden nicht gewünscht, um den ursprünglichen Charakter des Fahrrades nicht zu beeinträchtigen.

Weiterhin können diese "clip on units" aufgrund der Diebstahlgefahr nicht permanent am Rad belassen werden. Diese sind somit separat mitzuführen, was wiederum sehr unpraktisch ist. Häufig kommt es vor, dass die Beleuchtungseinheiten abgelegt und vergessen werden.

Weiterhin sind im Stand der Technik Beleuchtungsvorrichtungen für Fahrräder offenbart, welche mittels flexibler Arme und einer zentralen Befestigung die freie Positionierung von zwei Anzeigemitteln im Rahmen des Umfangs der flexiblen Arme ermöglichen. Diese flexiblen Arme sind mit einer Box zur Aufnahme der Elektroenergiequelle verbunden und über diese mit Befestigungsmitteln an einer Halterung, beispielsweise am Lenker, angebracht.

Im Stand der Technik sind weiterhin Beleuchtungsvorrichtungen beschrieben, die in den Lenker seitlich gesteckt werden, wobei die Beleuchtungsmittel über das Lenkerende hinausragen und eine seitliche Beleuchtung des Fahrrads ermöglichen. Nachteilig hierbei ist, dass diese Steckverbindung dem Innendurchmesser des Fahrradlenkers angepasst werden muss und diesbezüglich leicht herausfallen kann. Das Dokument DE-U-9301227 beschreibt einen Fahrradblinker mit einem Griffstück und einem Griffkopf, die einstückig ausgebildet sind und somit nicht voneinander gelöst werden können. Die Aufgabe der Erfindung ist es, ein Beleuchtungssystem bereitzustellen, welches nicht die Nachteile oder Mängel der im Stand der Technik beschriebenen Beleuchtungssysteme aufweist, die Verkehrssicherheit erhöht und flexibel und universell einsetzbar ist.
Die Aufgabe wird durch die unabhängigen Ansprüche 1 und 13 gelöst. Vorteilhafte Ausführungsformen ergeben sich aus den Unteransprüchen.

Es war völlig überraschend, dass ein Beleuchtungssystem gemäß des Anspruchs 1, flexibel mit einem Lenker verbunden werden kann und eine vordere, seitliche und/oder hintere Beleuchtung des Fahrrads ermöglicht. Hierbei umfasst das Beleuchtungssystem für ein Fahrrad, ein Griffstück und einen Griffkopf, wobei das Griffstück auf den äußeren Endpositionen eines Lenkers aufgebracht und mit dem Griffkopf verbunden ist, und der Griffkopf mindestens eine schaltbare Beleuchtungseinheit umfasst und die Beleuchtungseinheit über eine Elektroenergiequelle mit Elektroenergie versorgt wird. Das erfindungsgemäße Beleuchtungssystem umfasst mindestens zwei Elemente - ein Griffstück und einen Griffkopf. Das Griffstück wird auf die äußeren Endpositionen eines Lenkers aufgezogen und dient zum Einen als Halterung des Griffkopfes und zum Anderen als Lenkergriff. Das Griffstück kann bevorzugt eine Griffhülse und einen Griffmantel umfassen. Die Griffhülse kann dem Fahrradlenkerdurchmesser angepasst werden und besteht bevorzugt aus Kunststoff. Kunststoffe bezeichnen Materialien, deren wesentliche Bestandteile aus solchen makromolekularen organischen Verb. bestehen, die synthetisch oder durch Abwandeln von Naturprodukten entstehen. Sie sind bevorzugt unter bestimmten Bedingungen (Wärme oder Druck) schmelz- und formbar. Zu den Kunststoffen gehören auch Kautschuke und Chemiefasern. Auch synthetischen Lackrohstoffe und Klebstoffe können zu den Kunststoffen gezählt werden. Für die vorteilhafte Ausführungsform können Kunststoffe aus der Gruppe abgewandelte Naturstoffe, synthetische Kunststoffe (Polykondensate, Polymerisate, Polyaddukte), Duroplaste, und/oder ungesättigte Polyesterharze, umfassend Cellulosenitrat, Celluloseacetat, Cellulosemischester, Celluloseether, Polyamid, Polycarbonat, Polyester, Polyphenylenoxid, Polysulfon, Polyvinylacetal, Polyethylen, Polypropylen, Poly-1-buten, Poly-4-methyl-1-penten, lonomere, Polyvinylchlorid, Polyvinylidenchlorid, Polymethylmethacrylat, Polyacrylnitril, Polystyrol, Polyacetal, Fluor-Kunststoffe, Polyvinylalkohol, Polyvinylacetat, Poly-p-xylylen, lineare Polyurethane, chlorierte Polyether, Casein-Kunststoffe, Phenol-Harz, Harnstoff-Harz, Thioharnstoff-Harz, Melamin-Harz, Epoxidharz, vernetzte Polyurethane, Alkydharz, Allylharz, Silicon, Polyimid, und/oder Polybenzimidazol verwendet werden. Der Griffmantel kann beispielsweise aus synthetischen Polymeren, umfassend Silikon, hergestellt sein. Silikone (Poly-organo-siloxane) bezeichnen eine Gruppe von synthetischen polymeren Verbindungen, in denen Silicium-Atome über Sauerstoff-Atome kettenartig und/oder netzartig verknüpft sind. Weiterhin enthalten Silikone bevorzugt Kohlenwasserstoff-Reste (umfassend MethylGruppen, Ethyl-Gruppen, Propyl-Gruppen oder Phenyl-Gruppen). Es können jedoch auch andere Polymere, umfassend Polyethylen, Polystyrol, Polyvinylchlorid, Polyvinylacetat, Polymethylmethacrylat oder Polyethylenoxid oder Kombinationen hieraus verwendet werden. Silikon ist als Lenkergriffmaterial bevorzugt, da es einen guten Griff, sowie Schutz vor Feuchtigkeit und Stoß bietet. Es war völlig überraschend, dass das Griffstück, welches auf das Lenkerende aufgezogen wird, das Beleuchtungssystem so gut fixiert. Ein wesentlicher Vorteil ist, dass das erfindungsgemäße Beleuchtungssystem flexibel auf im Wesentlichen alle gängigen Fahrradlenker aufziehbar oder anbringbar ist, was Material und Kosten reduziert. Außerdem hat sich überraschenderweise herausgestellt, dass insbesondere das Griffstück die Störanfälligkeit des Beleuchtungssystems reduziert und es optimal im beziehungsweise am Lenker fixiert. Weiterhin wird durch die Anbringungsart überraschenderweise die Leuchtdauer verbessert, da die Elektroenergiequelle weniger durch Vibrationen gestört und ggf. geschädigt wird und somit länger die erforderliche Leistung erbringen kann. Die Struktur und der Aufbau des Beleuchtungssystems passt sich flexibel an einen Außendurchmesser eines Lenkers beziehungsweise Lenkerendes an. Durch die elastischen Eigenschaften des Griffstückes wird eine hohe Flexibilität erreicht und gleichzeitig wird das Griffstück optimal auf dem Lenkerende fixiert. Auch kann das Griffstück in unterschiedlichen Farben vorliegen, wodurch unterschiedliche Farbvariationen des Griffmaterials möglich sind. Hierdurch kann das erfindungsgemäße Beleuchtungssystem individuell gestaltet werden und beispielsweise an die Farbe des Fahrrades angepasst werden. Es war völlig überraschend, dass durch eine Formänderung des Griffstückes eine optimale Anpassung an unterschiedliche Fahrradtypen möglich wird. Das Griffstück kann so beispielsweise auf Rennräder- sowie auf Mountainbike-Lenker aufgebracht werden. Die Formänderung kann zum Einen durch die flexiblen Eigenschaften des Griffstückes oder zum Anderen durch die Verwendung von unterschiedlichen Griffstückformen hervorgerufen werden. Der Griffkopf wird bevorzugt in den Lenker von den Endpositionen der Lenkerenden her, eingeführt. Der Griffkopf umfasst die Beleuchtungseinheit mit dem Batterieschacht. Die Verbindung zwischen Griffkopf und Griffstück erfolgt mittels einer Griffschelle. Hierdurch wird eine sichere, stabile und vor allem rutschfeste Aufnahme der Beleuchtungseinheit in den Griffkopf realisiert. Die Griffschelle kann aus Metall bestehen und dient zur Fixierung des Griffstückes auf dem Fahrradlenker mittels beispielsweise Schraubverbindung. Durch die bevorzugte Klemmwirkung wird das Griffstück auf dem Fahrradlenker fest gehalten. Der Griffkopf mit Batterieschacht wird nach Einführung in den Fahrradlenker bevorzugt über eine Schraubverbindung, Bajonettverschluss und/oder durch eine formschlüssige Verbindung und beispielsweise einer Sicherung, welche sich in der Griffschelle befindet, mit dem Griffstück verbunden. Durch die Sicherung kann eine sichere Verbindung hergestellt werden, die die stabile Verbindung auch auf unebenen Fahrbahnbelag aufrecht erhält. Außerdem kann diese vorteilshafterweise auch als Diebstahlsicherung genutzt werden. Versuche haben gezeigt, dass durch die Befestigung über das Griffstück und den Griffkopf, die Leistung und Leistungsdauer der Beleuchtungseinheit verbessert werden kann und das System außerdem eine höhere Zuverlässigkeit aufweist. Es lassen sich so überraschenderweise Fehler, die bei den im Stand der Technik beschriebenen Beleuchtungsvorrichtungen auftreten, vermeiden. Beispiele hierfür sind, Stoßempfindlichkeit, kurze Lebensdauer oder ungleichmäßige Beleuchtung. Insbesondere die gleichmäßige Beleuchtung spielt im Straßenverkehr eine entscheidende Rolle. Durch die erfindungsgemäße Fixierung des Beleuchtungssystems werden weniger Vibrationen an die Beleuchtungseinheit weitergeleitet, wodurch die elektrischen Komponenten weniger bis gar nicht beschädigt werden. Hierdurch kann überraschenderweise eine konstante Beleuchtung garantiert werden. Die Qualität der Beleuchtung wird verbessert und der Kunde erhält eine funktionierende und zuverlässige Beleuchtung.

Außerdem ist kein Fachmann für die Montage des Beleuchtungssystems nötig und das System ist im Wesentlichen wartungsfrei.

Der Griffkopf umfasst weiterhin einen Batterieschacht, der in dem Lenker vorliegt. Es ist bevorzugt, dass der Griffkopf mit dem Batterieschacht mittels einer Schraubverbindung verbunden ist. Hierdurch wird eine stabile, jedoch reversible Verbindung von dem Batterieschacht mit dem Griffkopf hergestellt. Es kann jedoch auch bevorzugt sein, dass der Griffkopf mit dem Batterieschacht über eine stoffschlüssige Verbindung verbunden ist, da somit eine stabile und bevorzugt wasserdichte Verbindung hergestellt wird. Stoffschlüssige Verbindungen beschreiben im Sinne der Erfindung Verbindungen, die durch atomare und/oder molekulare Kräfte zusammengehalten werden und bevorzugt nicht lösbar sind. Beispiele hierfür sind Kleben, Schweißen, Löten oder Vulkanisieren. Es kann bevorzugt sein, die Schraubverbindung zwischen Batterieschacht und Griffkopf mittels einer Dichtung wasserdicht zu verbinden. Durch die Dichtung wird ein ungewollter Stoffübergang zwischen dem Batterieschacht und dem Griffkopf verhindert. Beispiele für eine Dichtung umfassen Flachdichtung, Profildichtung, Muffendichtung Walzdichtung, Wellendichtung, stoffschlüssige Dichtungen (Kleben, Löten oder Schweißen), Dichtungsmasse (Kitt oder Bitumen), Dichtungsschelle, Einschleifdichtung oder Pressverbindung. Materialien für Dichtungen umfassen beispielsweise Elastomere, Pressfaser, Aramidfaser, Kohlefaser, Mineralfaser, Metall oder Kunststoff. Durch die Pressung der Dichtung zwischen den Batterieschacht und den Griffkopf, kann beispielsweise kein Wasser eindringen und Schädigungen verursachen. Auch werden die in dem Batterieschacht vorliegenden Batterien durch die Dichtung vor Wasser geschützt. Außerdem konnte durch Versuche gezeigt werden, dass die Dichtung eine dämpfende Wirkung hat und so den Batterieschacht vor Ausfällen, verursacht durch Stoß, schützt. Der Batterieschacht dient bevorzugt der Aufnahme von Batterien, die als Elektroenergiequelle die Beleuchtungseinheit mit Elektroenergie versorgen. Die in den Batterieschacht eingeführten Batterien sind bevorzugt aufladbar. Es kann bevorzugt sein, dass an dem Griffkopf eine Anschlussvorrichtung vorliegt, die ein Aufladen der Batterien über beispielsweise ein Stromnetz erlaubt. Hierdurch können die Batterien im System verweilen und einfach aufgeladen werden.

Es kann jedoch auch bevorzugt sein, dass die Batterien nicht aufladbar sind und nach Verbrauch einfach und schnell durch neue

Batterien ersetzt werden. Der Batterieschacht wird bevorzugt in unterschiedlichen Längen zur Verfügung gestellt, um so die Integration von unterschiedlichen Batterien zu erlauben. Hierdurch kann ein Kunde vorteilhafterweise selbst entscheiden, welche Batterien in das System integriert werden sollen. Dies kann beispielsweise auch von der Form des Lenkers abhängig sein. Die Batterien können bevorzugt über einen Schnellverschluss in den Batterieschacht eingeführt werden. Vorteilhafterweise kann durch den Schnellverschluss ebenfalls sichergestellt werden, dass die Batterien in der vorgeschriebenen Orientierung in den Schacht eingeführt werden. Außerdem kann über den Schnellverschluss bevorzugt ein elektrischer Kontakt, beispielsweise mittels einer Kontaktfeder, hergestellt werden.

Der Batterieschacht besteht bevorzugt aus Kunststoff. Kunststoffe bezeichnen Materialien, deren wesentliche Bestandteile aus solchen makromolekularen organischen Verb. bestehen, die synthetisch oder durch Abwandeln von Naturprodukten entstehen. Sie sind bevorzugt unter bestimmten Bedingungen (Wärme oder Druck) schmelz- und formbar. Zu den Kunststoffen gehören auch Kautschuke und Chemiefasern. Auch synthetischen Lackrohstoffe und Klebstoffe können zu den Kunststoffen gezählt werden. Für die vorteilhafte Ausführungsform können Kunststoffe aus der Gruppe abgewandelte Naturstoffe, synthetische Kunststoffe (Polykondensate, Polymerisate, Polyaddukte), Duroplaste, und/oder ungesättigte Polyesterharze, umfassend Cellulosenitrat, Celluloseacetat, Cellulosemischester, Celluloseether, Polyamid, Polycarbonat, Polyester, Polyphenylenoxid, Polysulfon, Polyvinylacetal, Polyethylen, Polypropylen, Poly-1-buten, Poly-4-methyl-1-penten, lonomere, Polyvinylchlorid, Polyvinylidenchlorid, Polymethylmethacrylat, Polyacrylnitril, Polystyrol, Polyacetal, Fluor-Kunststoffe, Polyvinylalkohol, Polyvinylacetat, Poly-*p*-xylylen, lineare Polyurethane, chlorierte Polyether, Casein-Kunststoffe, Phenol-Harz, Harnstoff-Harz, Thioharnstoff-Harz, Melamin-Harz, Epoxidharz, vernetzte Polyurethane, Alkydharz, Allylharz, Silicon, Polyimid, und/oder Polybenzimidazol verwendet werden.

Die Herstellung des Batterieschachtes aus Kunststoff, erlaubt eine einfache Bearbeitung des Schachtes, der jedoch eine hohe Stabilität aufweist. So ist es beispielsweise bevorzugt, eine Kabelzuführung von dem Batterieschacht zu der Beleuchtungseinheit zu führen. Hierfür ist eine einfache und schnelle Anpassung des Batterieschachtes möglich, indem beispielsweise in den Rand des Schachtes Kabeldurchführbuchten eingefügt werden, die ein Durchführen eines Kabels ermöglichen. Die Kabel können auch beispielsweise durch den Schnellverschluss geleitet werden. Die Führung der Verbindungskabel erfolgt bevorzugt am Rand des Batterieschachtes. Der Griffkopf umfasst weiterhin bevorzugt eine Leiterplatte. Eine Leiterplatte ist ein Träger für elektronische Bauteile und dient bevorzugt der mechanischen Befestigung und elektrischen Verbindung. Leiterplatten bestehen bevorzugt aus elektrisch isolierendem Material mit daran haftenden, leitenden Verbindungen (Leiterbahnen). Als isolierendes Material kann faserverstärkter Kunststoff genutzt werden. Die Leiterbahnen werden bevorzugt aus einer dünnen Schicht Kupfer geätzt. Die Bauelemente können auf Lötflächen oder in Lötaugen gelötet werden, wodurch sie gleichzeitig mechanisch gehalten und elektrisch verbunden werden. Größere Bauelemente können auch mit Kabelbindern, Klebstoff, Steckverbindungen oder Verschraubungen auf der Leiterplatte befestigt werden.
Die Beleuchtungseinheiten umfassen bevorzugt künstliche Lichtquellen beispielsweise Glühlampen, Leuchtstofflampen oder chemisches Licht. Die Einheiten sind bevorzugt mit der Elektroenergiequelle verbunden und werden von dieser mit Elektroenergie versorgt. Die Beleuchtungseinheiten sind bevorzugt in das äußere Ende des Griffkopfes integriert und reichen bevorzugt über das Ende des Lenkers hinaus. Hierdurch wird sichergestellt, dass das beleuchtete Fahrrad von allen Seiten sichtbar ist. Die erfindungsgemäße Beleuchtungseinheit ist schaltbar, das heißt, die Energiezufuhr kann vorteilhafterweise von der Elektroenergiequelle zu der Beleuchtungseinheit von dem Fahrenden selbst reguliert werden. Im Sinne der Erfindung ist ein Schalter eine Baugruppe, die mittels zweier elektrisch leitender Materialien oder eines Halbleiterbauelements eine elektrisch leitende Verbindung herstellt oder trennt. Vorteilhafterweise arbeitet der Schalter nach dem Alles-oder-nichts-Prinzip, das heißt eine Betätigung führt eindeutig zu einem Schaltzustand "offen" oder "geschlossen". Ein Schalter umfasst bevorzugt einen Kippschalter, Wippschalter, Druckschalter, Rastschalter, Schiebeschalter, Drehschalter oder Tastschalter. Der Schalter kann beispielsweise an dem Griffstück oder dem Griffkopf angeordnet sein, kann sich jedoch auch separat von dem Beleuchtungssystem am Lenker befinden. Es kann auch bevorzugt sein, dass der Schalter unterschiedliche Stufen aufweist, die beispielsweise die Helligkeit der Beleuchtungseinheit regulieren. Auch kann über den Schalter eingestellt werden, ob die Beleuchtungseinheit dauerhaft leuchtet oder blinkt.
Die Beleuchtungseinheit kann von einer Schutzabdeckung umgeben sein, die die Einheit vor Stoß und Witterungseinflüssen schützt. Die Schutzabdeckung ist bevorzugt aus Kunststoff gefertigt. Es kann auch bevorzugt sein, dass die Abdeckung farblich gestaltet ist, oder unterschiedliche Formen aufweist. Hierdurch können beispielsweise Lichteffekte generiert werden, oder das von der Beleuchtungseinheit ausgehende Licht verstärken. Es kann auch bevorzugt sein, dass durch die Schutzabdeckung das Licht in eine bestimmte Richtung, beispielsweise vorne, hinten oder seitlich geleitet wird. Somit können durch die Schutzabdeckung einfache Anpassungen an unterschiedliche Fahrradmodelle mit unterschiedlichen Lenkerformen vorgenommen werden. Der Griffkopf und das Griffstück sind über eine Schraubverbindung, Bajonettverschluss und/oder formschlüssige Verbindung miteinander verbunden. Im Sinne der Erfindung beschreiben Bajonettverbindungen leicht lösbare Verbindungen, die zwei Teile in der Richtung ihrer Längsachse miteinander verbindet. Die Verbindung erfolgt über eine Steck-Dreh-Bewegung. Formschlüssige Verbindungen sind im Sinne der Erfindung Verbindungen, bei denen ein Verbindungspartner die Bewegung des anderen Verbindungspartners unterbindet. Beispiele hierfür umfassen Schnappverbindungen, Nut-Feder-Verbindung, Passfeder und Nute oder Nietverbindungen. Vorteilhafterweise erfolgt die Verbindung von Griffstück und Griffkopf mittels einer Schraubverbindung. Durch das Lösen der Verbindung nebst Sicherung kann der Griffkopf mit dem verbundenen Batterieschacht aus dem Lenker gezogen werden. Der Austausch der Batterien erfolgt bevorzugt durch das Lösen der Schraubverbindung von Griffkopf und Batterieschacht.

Durch die Verbindungsart ist eine sichere und stabile Verbindung hergestellt, die auch Vibrationen bedingt durch nicht ebenen Untergrund problemlos aushält. Außerdem kann die Verbindung schnell und einfach gelöst werden, wodurch eine hohe Flexibilität erreicht wird. Durch die Verbindung des Griffkopfes mit dem Griffstück wird das Beleuchtungssystem bevorzugt reversibel mit dem Fahrrad verbunden. Für die Lösung der Verbindung sind zum Einen Kenntnisse über die Art der Verbindung notwendig und zum Anderen wird bevorzugt ein Spezialwerkzeug für die Lösung der Sicherung benötigt. Hierdurch entsteht eine optimale Diebstahlsicherung, die keine weiteren Komponenten benötigt und einfach zu montieren ist.
Es ist bevorzugt, dass der Griffkopf mit Batterieschacht aus Kunststoff, umfassend Polycarbonat, Polyamid, Polyester, Polyphenylenoxid, Polyvinylchlorid oder Polymethylmethacrylat besteht. Diese bevorzugte Ausführungsform weist eine hohe Flexibilität und Stabilität auf. Es hat sich außerdem überraschenderweise herausgestellt, dass hierdurch auch die Stoßempfindlichkeit des Beleuchtungssystems erheblich verbessern lässt und weiterhin keine Oxidationsprozesse an dem Griffkopf ablaufen. Somit kann eine hohe Qualität und Zuverlässigkeit des Beleuchtungssystems sichergestellt werden.
Es ist weiterhin bevorzugt, dass eine, bevorzugt zwei und besonders bevorzugt drei Beleuchtungseinheiten in das Beleuchtungssystem integriert sind. Die Integration von einer Beleuchtungseinheit kann vorteilhaft sein, wenn das Beleuchtungssystem ausschließlich zur Seite leuchten soll, das heißt, wenn das Fahrrad seitlich beleuchtet werden soll. Dies kann beispielsweise der Fall sein, wenn bereits weitere Beleuchtungsmittel oder -vorrichtungen an dem Fahrrad, bevorzugt auf der Längsachse vorne und hinten angebracht sind. Hier hat das Beleuchtungssystem ergänzende Funktionen, wobei es wesentliche Lücken der bereits vorhandenen Beleuchtungsmittel schließt. Es kann hingegen besonders bevorzugt sein, zwei Beleuchtungseinheiten in den Griffkopf zu integrieren. Hierbei kann beispielsweise eine Einheit nach vorne und eine nach hinten leuchten, oder eine nach vorne oder hinten und eine weitere zur Seite. Dies kann besonders für Fahrräder ohne bestehende Beleuchtungsmittel vorteilhaft sein. Die Beleuchtungseinheiten können variabel in dem Beleuchtungssystem angeordnet werden. Eine besonders bevorzugte Ausführung ist die Benutzung von drei Beleuchtungseinheiten. Hierbei können die Einheiten bevorzugt nach vorne, zur Seite und nach hinten leuchten. Hierdurch wird eine vollständige Beleuchtung des Fahrrads erreicht und es kann ggf. auf eine weitere Beleuchtungsvorrichtung am Fahrrad verzichtet werden. Das Fahrrad ist für alle Verkehrsteilnehmer gut sichtbar, wobei diese sogar die Breite des Fahrrads abschätzen können. Dies ist besonders bei der Durchfahrt von engen Straßenpassagen vorteilhaft. Die Beleuchtungseinheiten können beispielsweise in einer Reihe oder versetzt in dem Beleuchtungssystem angeordnet werden.
Es kann vorteilhaft sein, die Beleuchtungseinheiten räumlich voneinander zu trennen. Hierfür können beispielsweise Sichtfenster aus Kunststoff zwischen die Beleuchtungseinheiten angeordnet werden. Die Sichtfenster bewirken, dass das von den Beleuchtungseinheiten kommende Licht bevorzugt an den Sichtfenstern reflektiert und so in eine definierte Richtung gelenkt wird, wodurch ggf. das Licht nach vorne, zur Seite oder nach hinten intensiviert wird. Dies verbessert die Sichtbarkeit des Fahrrads. Die Sichtfenster können vorteilhafterweise in unterschiedlichen Farben und/oder Formen ausgestaltet sein. Es kann auch vorteilhaft sein, reflektierende und transparente Sichtfenster alternierend anzuordnen. Hierdurch wird das Licht der Beleuchtungseinheiten in eine bestimmte Richtung gelenkt, wobei das Licht durch beispielsweise farbige Sichtfenster hindurch tritt, die eine unterschiedliche Farbgebung des Lichtes bewirken. Es kann beispielsweise nach vorne strahlendes Licht weiß, nach hinten strahlendes Licht rot und zur Seite strahlendes Licht gelb dargestellt werden. Somit kann durch einfache konstruktive Maßnahmen, eine unterschiedliche Beleuchtung des Fahrrads entstehen. Dies kann insbesondere in stark befahrenen Verkehrsgebieten wichtig sein, da dort das Hintergrundlicht sehr stark ist und durch eine unterschiedliche Beleuchtung des Fahrrads, dieses wesentlich besser und einfacher zu sehen ist.
In einer bevorzugten Ausführungsform ist die Beleuchtungseinheit eine LED. Eine LED bezeichnet im Sinne der Erfindung eine lichtemittierende Diode ("light emitting diode" - Leuchtdiode), das heißt ein Bauelement der Optoelektronik, welches als HalbleiterBauelement ausgebildet ist. Wenn durch die Diode ein Strom in Durchlassrichtung fließt, so strahlt die Leuchtdiode im Sinne der Erfindung Licht, Infrarotstrahlung oder auch Ultraviolettstrahlung in verschiedenen Wellenlängen ab. Die Leuchtdiode (LED) weist einen Halbleiterkristall auf, der in einer Reflektorwanne eingebettet ist. Der Reflektor ist von einer transparenten Kunststoffummantelung umgeben. Anders als beispielsweise Glühlampen sind Leuchtdioden vorteilhafterweise keine Temperaturstrahler. Sie emittieren das Licht in einem begrenzten Spektralbereich, wobei dieses nahezu monochrom ist. Die LEDs sind günstig in der Herstellung und fallen, beispielsweise wie Glühlampen, nicht plötzlich aus. Sie sind unempfindlich gegen Erschütterungen und haben keinen Hohlkörper, der implodieren kann. Außerdem weisen LEDs eine längere Lebensdauer als normale Glühbirnen auf und verbrauchen weniger Strom. Die Lebensdauer beziehungsweise die Leuchtstärke kann durch die bevorzugte Verwendung von Hochleistungs-LEDs wesentlich erhöht werden. Vorteilhafterweise sind die LEDs platzsparend und können durch den Benutzer einfach und schnell ausgetauscht werden. Die Leuchtstärke der LEDs lässt sich bevorzugt mittels des Schalters regulieren, wobei es auch vorteilhaft sein kann, einzelne LEDs mittels des Schalters auszuschalten. Durch die Verwendung von LEDs können die Vorteile wie Energieeffizienz, ausgezeichnete Leuchtstärke mit einer hohen Widerstandsfähigkeit verbunden werden.
Es ist bevorzugt, dass die verwendeten LED farbiges Licht emittieren. Die Lichtemission der LED beruht, wie bereits ausgeführt, auf der Rekombination von Elektron-Loch-Paaren im Übergangsgebiet eines in Durchlaßrichtung gepolten pn-Übergangs eines Halbleiters. Die Größe der Bandlücke dieses Halbleiters bestimmt die emittierte Wellenlänge. Somit ist es möglich LEDs zu benutzen, die unterschiedliches Licht emittieren. Durch die gezielte Auswahl der Halbleitermaterialien und/oder Beschichtung der LEDs, können die Eigenschaften des erzeugten Lichts variiert werden. Vor allem der Spektralbereich und die Effizienz lassen sich so beeinflussen. Folgende LED-Variationen sind bevorzugt:
- Aluminiumgalliumarsenid (AlGaAs) - rot und infrarot,
- Galliumaluminiumarsenid (GaAlAs) -, rot,
- Galliumarsenidphosphid (GaAsP) und Aluminiumindiumgalliumphosphid (Alln-GaP) - rot, orange und gelb,
- Galliumphosphid (GaP) - grün,
- Siliciumcarbid (SiC) - blau,
- Zinkselenid (ZnSe) - blau oder
- Indiumgalliumnitrid (InGaN)/Galliumnitrid (GaN) - blau und grün.

Weiße LEDs sind meistens blaue LEDs mit einer Phosphorschicht, die als Lumineszenz-Konverter wirkt. Besonders durch die Benutzung farbiger LEDs, kann eine unterschiedliche Beleuchtung eines Fahrrads realisiert werden. So können beispielsweise LEDs, die ein rotes Licht emittieren nach hinten, LEDs, die ein weißes Licht emittieren nach vorne und LEDs, die ein gelbes Licht emittieren zur Seite strahlen. Hierdurch ist eine eindeutige Erkennung des mit dem Beleuchtungssystem ausgestatteten Fahrrad möglich.

Es ist bevorzugt, dass die LEDs auf einer Leiterplatte eingelötet sind. Die Beleuchtungseinheit beinhaltet die LEDs, welche auf einer Leiterplatten oder Leiterplattenscheibe bevorzugt parallel eingelötet sind. Dabei kann die Anzahl der LED-Lampen je nach Anforderung variieren. Hierdurch wird eine einfache elektrische Verbindung hergestellt, die wenig bis gar nicht störanfällig und auch nicht erschütterungsempfindlich ist. In einer weiteren bevorzugten Ausführungsform sind die LEDs in Chips angeordnet beispielsweise LED-Halbleiterchips, Hochleistungs-LED-Chips, COB-LEDs, LED-Module bzw. LED-Fließen, oder auch LED-Ketten oder gesockelte LEDs. Die LED-Chips können auf Platinen angeordnet sein, die die Wärme besonders gut ableiten, da die Lichtleistung mit der Erwärmung des LED-Chips abnimmt. Die LED-Chips sind bevorzugt auf Wärme leitendem Material wie Aluminium oder Keramik oder anderen gebaut beziehungsweise positioniert.
Eine weitere bevorzugte Ausführungsform ist, dass die LED mit einer Elektroenergiequelle über eine Leiterplatte und Verbindungskabel verbunden sind. Der Pluspol der LED befindet sich bevorzugt auf der äußeren Seite der Leiterplattenscheibe. Er kann beispielsweise mittels einer Steckverbindung mit den Kabeln einer Elektroenergiequelle, beispielsweise einem Batterieschacht verbunden werden. Der Minuspol der LED kann sich vorteilhafterweise auf der inneren Seite der Leiterplattenscheibe befinden. Hierdurch entsteht eine kompakte und einfache elektrische Verbindung, die sehr wartungsarm ist. Die Verbindung ist ebenfalls leicht zugänglich und kann demnach schnell und einfach auf Fehler untersucht werden. Außerdem sind die Materialien kostengünstig, was sich wiederum auf den Kaufpreis des Beleuchtungssystems niederschlägt. Weiterhin ist es vorteilhaft, wenn ein Widerstand auf der Leiterplatte angebracht ist. Ein Widerstand bezeichnet im Sinne der Erfindung die Eigenschaft elektrischer Leiter einen Stromfluß zu hemmen. Gemäß dem Ohmschen Gesetz ist ein elektrischer Widerstand der Quotient aus Spannung und Stromstärke und wird in Ohm angegeben. Es kann jedoch auch bevorzugt sein, einen kapazitiven oder induktiven Widerstand zu benutzen. Da die Leuchtstärke der Beleuchtungseinheit von der Spannung der Elektroenergiequelle abhängig ist, bewirkt ein Widerstand auf der Leiterplatte überraschenderweise, dass die Leuchtstärke der Beleuchtungseinheit auch bei variierender Spannung konstant ist. Somit garantiert die bevorzugte Ausführungsform eine im Wesentlichen konstante Beleuchtungsintensität der Beleuchtungseinheit, wobei eine kompakte Bauform des Beleuchtungssystems realisiert wird.

Eine weitere bevorzugte Ausführungsform ist, dass ein Kondensator auf der Leiterplatte angebracht ist. Ein Kondensator ist im Sinne der Erfindung ein elektronisches Bauelement, dessen Kapazität vom geometrischen Aufbau und den elektrischen Eigenschaften des Dielektrikums zwischen Kondensatorplatten abhängt. Vorteilhafterweise können unterschiedliche Kondensatorbauformen, umfassend Papier-, Metall-Papier-, Kunststoff-, Metall-Kunststoff-, Keramik- oder Elektrolyt-Kondensatoren auf die Leiterplatte aufgebracht werden. Bevorzugt ist ein Plattenkondensator, Zylinderkondensator oder Kugelkondensator. Es können jedoch auch weitere Formen von Kondensatoren verwendet werden. Es war völlig überraschend, dass bevorzugt kurzfristige Spannungsabfälle, die beispielsweise durch schlechte Straßenzustände ausgelöst werden, durch einen Kondensator auf der Leiterplatte kompensiert werden. Dies garantiert einen dauerhaften Betrieb der bevorzugten Beleuchtungseinheit auch bei schlechten Straßenoberflächen. Dies kann besonders für Fahrradtouren über unebenes Gelände von Vorteil sein. Somit kann das bevorzugte Beleuchtungssystem auch für Mountainbikes genutzt werden. Das System kann außerdem bei Belieben einfach und schnell von dem Fahrrad entfernt werden und beispielsweise als Taschenlampe genutzt werden.
Es ist weiterhin bevorzugt, dass ein Diffusor in das Beleuchtungssystem integriert ist. Ein Diffusor ist im Sinne der Erfindung eine Vorrichtung, die einfallendes Licht, beispielsweise von der Beleuchtungseinheit dämpft und streut. Durch einen Diffusor wird ein weich-wirkendes Licht generiert sowie eine gleichmäßige Abstrahlung über bevorzugt seine gesamte Fläche erreicht. Der Diffusor kann vorteilhafterweise als Abdeckung der Beleuchtungseinheit genutzt werden, wobei er auf den Griffkopf aufgebracht werden kann. Der Diffusor bewirkt überraschenderweise, dass andere Verkehrsteilnehmer und der Fahrradfahrer selbst nicht durch die Beleuchtungseinheit geblendet werden. Hierdurch werden wesentliche Mängel, der im Stand der Technik beschriebenen Beleuchtungseinheiten behoben. Außerdem ist der Diffusor bevorzugt aus Kunststoff hergestellt und somit im Wesentlichen stoßunempfindlich.
Die Erfindung betrifft weiterhin die Verwendung eines Beleuchtungssystems zur Beleuchtung eines Fahrradlenkers. Ein Beleuchtungssystem umfasst bevorzugt einen Griffkopf und ein Griffstück, wobei das Griffstück auf ein Lenkerende eines Fahrrads aufgebracht wird. Das Griffstück kann vorteilhafterweise auf diesen aufgezogen werden, da das Griffstück bevorzugt elastische Eigenschaften aufweist. Hierdurch ist ein schnelles und vor Allem einfaches Aufbringen des Beleuchtungssystems auf einen Lenker möglich. Außerdem kann das System universell verwendet werden, das heißt, es kann auf im Wesentlichen alle Fahrradmodelle und Lenker aufgebracht werden. Das Griffstück kann bevorzugt eine Griffhülse und einen Griffmantel umfassen. Die Griffhülse kann dem Fahrradlenkerdurchmesser angepasst werden und besteht bevorzugt aus Kunststoff. Es sind keine weiteren Modifikationen oder Halterungsvorrichtungen nötig, um das System sicher und stabil auf einem Lenker anzubringen.
Der Batterieschacht beherbergt eine Elektroenergiequelle. Eine bevorzugte Elektroenergiequelle ist ein elektrochemischer Energiespeicher, beispielsweise Batterien. Die Batterien können einfach in den Batterieschacht eingeführt werden und werden in diesem durch einen Verschluss in dem Schacht arretiert. Vorteilhafterweise können auch aufladbare Batterien genutzt werden. Die Aufladung der Batterien kann beispielsweise über einen Kabelanschluss erfolgen, der an dem Griffkopf angebracht ist und die Batterien mit einer Stromquelle verbindet. Hierdurch ist es nicht nötig, die Batterien aus dem Batterieschacht oder dem Beleuchtungssystem zu entfernen. Es kann jedoch auch vorteilhaft sein, die Batterien aus dem Schacht zu entnehmen und separat aufzuladen.

Weiterhin kann es bevorzugt sein, das Beleuchtungssystem an einen Dynamo anzuschließen. Ein Dynamo ist im Sinne der Erfindung ein Generator, der während der Fahrt die Stromversorgung, das heißt die Bereitstellung von Elektroenergie, mittels einer Drehbewegung sicherstellt. Der Dynamo kann über Kabel direkt mit der Beleuchtungseinheit verbunden sein. Vorteilhafterweise kann das System mit unterschiedlichen Dynamos, umfassend Seitenläuferdynamos, Nabendynamos, Speichendynamos, Rollendynamo/Walzendynamos oder Felgendynamos verbunden werden.
Insbesondere Nabendynamos weisen eine hohe Alltagstauglichkeit auf, da diese witterungsunabhängig funktionieren und verglichen mit den sonst üblichen Seitenläuferdynamos einen hohen Wirkungsgrad hat. Dadurch ist die Behinderung des Fahrbetriebs durch zusätzlich aufzuwendende Kraft gering. Vorteilhafterweise kann der Dynamo mit einem Kondensator verbunden sein, der eine Energiespeicherung ermöglicht, wodurch ein dauerhafter Betrieb des Beleuchtungssystems, auch bei Stillstand des Dynamos, sichergestellt werden kann.

Weitere Vorteile der Erfindung umfassen:
- Erhöhung der Verkehrssicherheit
   o Einfache Kontrolle der Funktionsbereitschaft der Beleuchtung
   o Aktive Seitenlichtfunktion (seitliche Begrenzung)
   o Vorder- und Rücklichtfunktion
   o Funktionalität im Standbetrieb
- Einfache Funktionalität
   o Direkte Integration mit dem Fahrrad und Lenkergriff
   o Ein- und Ausschaltfunktion
   o Hohe Ausleuchtung mit geringem Stromverbrauch
   o Flexible Montage / Demontage der Griffkomponenten
   o Schneller Batteriewechsel durch reversiblen Verschluss
   o Wasser- und stoßresistent
   o Verbesserter Diebstahlschutz
   o Neutrale Integration in das Fahrrad

Das erfindungsgemäße Beleuchtungssystem ermöglicht unter Beachtung der Straßenverkehrsordnung, eine Beleuchtung unauffällig an Fahrräder anzubringen. Durch die unauffällige Integration wird eine breitere Akzeptanz zur Nutzung von Beleuchtungseinrichtungen an Rädern ohne vorhandene Beleuchtung erreicht. Das Beleuchtungssystem ermöglicht eine bevorzugte Beleuchtung nach vorne, nach hinten und zur Seite. Gerade bei Überholvorgängen oder kreuzendem Verkehr kommt es des Öfteren dazu, dass Fahrräder von anderen Verkehrsteilnehmern übersehen werden. Durch die bevorzugte seitliche Ausleuchtung der Lenkergriffe lassen sich somit die Umrisse des Fahrrades früher erkennen und Entfernungen als auch Geschwindigkeiten besser durch andere Verkehrsteilnehmer einschätzen. Aufgrund der festen und einfachen Installation des Systems ist eine Beleuchtung des Fahrrades permanent gegeben. Das Beleuchtungssystem kann universell an unterschiedliche Fahrradmodelle, ohne das Anfallen von weiteren Kosten für Halterungsvorrichtungen, angebracht werden.

Da die Beleuchtungseinheiten bevorzugt mit den Lenkergriffen fest verschraubt sind, wird ein verbesserter Diebstahlschutz erreicht. Im Bedarfsfall können die demontierbaren Beleuchtungssysteme auch als Taschenlampe genutzt werden und verfügen somit über einen weiteren Zusatznutzen.

Die Erfindung wird im Folgenden beispielhaft anhand von Figuren erläutert, jedoch ohne auf diese beschränkt zu sein.

Es zeigen:
- Fig. 1: Beleuchtungssystem
- Fig. 2: Griffstück und Griffkopf
- Fig. 3: Detailansicht des Beleuchtungssystems

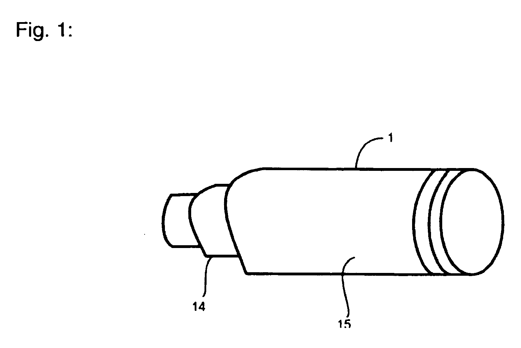

Fig. 1 zeigt ein Beleuchtungssystem bestehend aus einer Griffhülse 14 und einen Griffmantel 15. Hierbei kann das Beleuchtungssystem 1 bevorzugt auf die Endstücke eines Lenkers aufgebracht werden. Es wird als Griff sowie als Beleuchtung verwendet. Die Fixierung auf dem Lenker kann bevorzugt mittels einer Griffschelle erfolgen.

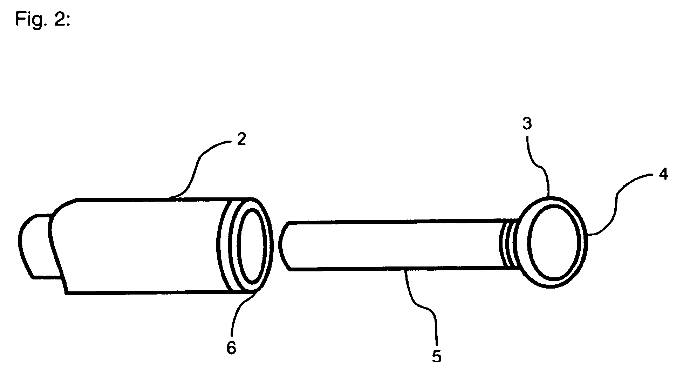

Fig. 2 stellt ein Griffstück und einen Griffkopf des Beleuchtungssystems dar. Der Griffkopf 4 wird vorteilhafterweise mit dem Griffstück 2 mittels einer Griffschelle 6, beispielsweise einer formschlüssigen Verbindung verbunden. Hierdurch ist eine optimale Arretierung beider Einheiten sichergestellt, was in einer hohen Stoßunempfindlichkeit resultiert. Der Griffkopf 4 ist mit dem Batterieschacht 5 verbunden, der eine elektrochemische Energiequelle 10 enthalten kann. Es kann jedoch auch bevorzugt sein, dass das Beleuchtungssystem 1 von einem Dynamo mit Elektroenergie versorgt wird. Der Batterieschacht 5 ist wiederum mit der Beleuchtungseinheit verbunden und versorgt diese mit Elektroenergie, wobei die Verbindung vorteilhafterweise über Verbindungskabel 11 hergestellt wird. Die Beleuchtungseinheit im Griffkopf 4 weist bevorzugt einen Diffusor 8 auf, der austretendes Licht streut. Ein Schalter 3 zur Regulierung der Beleuchtungseinheit kann beispielsweise an dem Griffkopf 4 angebracht sein. Es kann jedoch auch bevorzugt sein, den Schalter 3 an einer anderen Position, beispielsweise dem Lenker oder dem Griffstück 2 zu befestigen.

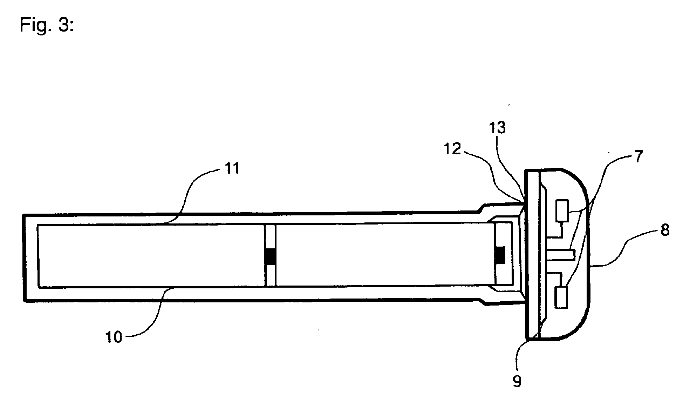

Fig. 3 zeigt eine Detailansicht eines Beleuchtungssystems. Das Beleuchtungssystem 1 besteht aus dem Griffstück 2 und den Griffkopf 4 und wird auf Fahrradlenker aufgesetzt. An den Innenseiten des Griffstückes 2 ist eine Griffschelle aus Metall oder Kunststoff fest eingelassen und/oder verklebt. Das Griffstück 2 und der Griffkopf 4 werden mittels der Griffschelle verbunden. Hierdurch wird ein stabiler Verbund der einzelnen Komponenten erreicht, der auch bei unebenen Gelände voll funktionsfähig ist. Außerdem ist das Beleuchtungssystem 1 wasserdicht, wodurch es auch permanent am Fahrrad verbleiben kann. Durch die stabile Verbindung der Elemente zuzüglich einer Sicherung in der Griffschelle wird weiterhin sichergestellt, dass das System nicht während der Fahrt heraus fällt oder von einem Dritten entwendet wird. Es kann so ein einfach zu montierendes und diebstahlsicheres Beleuchtungssystem zur Verfügung gestellt werden.

### Bezugszeichenliste

- 1: Beleuchtungssystem
- 2: Griffstück
- 3: Integrierter Schalter
- 4: Griffkopf
- 5: Batterieschacht
- 6: Griffschelle als Halterung des Griffstückes sowie Verbindung von Griffstück mit Griffkopf
- 7: LED
- 8: Diffusor
- 9: Leiterplatte mit Kondensator und Widerstand
- 10: Elektrochemische Energiespeicher
- 11: Verbindungskabel
- 12: Dichtung Batterieschacht/Griffkopf
- 13: Schraubverbindung Batterieschacht/Griffkopf
- 14: Griffhülse
- 15: Griffmantel

## Patentansprüche

1. Beleuchtungssystem für ein Fahrrad, umfassend ein Griffstück und einen Griffkopf, wobei das Griffstück auf einer äußeren Endposition eines Lenkers aufbringbar und mit dem Griffkopf über eine Schraubverbindung, Bajonettverschluss und/oder formschlüssige Verbindung verbunden ist, und der Griffkopf einen Batterieschacht und mindestens eine schaltbare Beleuchtungseinheit umfasst und die Beleuchtungseinheit über eine Elektroenergiequelle mit Elektroenergie versorgt wird.

2. Beleuchtungssystem nach Anspruch 1, wobei ein Schalter im Griffkopf angeordnet ist.

3. Beleuchtungssystem nach Anspruch 1 oder 2, wobei der Griffkopf und der Batterieschacht mittels einer Schraubverbindung verbunden sind.

4. Beleuchtungssystem nach Anspruch 3, wobei die Schraubverbindung zwischen Batterieschacht und Griffkopf mittels einer Dichtung wasserdicht verbunden ist.

5. Beleuchtungssystem nach einem oder mehreren der vorherigen Ansprüche, wobei eine, bevorzugt zwei und besonders bevorzugt drei Beleuchtungseinheiten integriert sind.

6. Beleuchtungssystem nach einem oder mehreren der vorherigen Ansprüche, wobei die Beleuchtungseinheit von einer Schutzabdeckung umgeben ist.

7. Beleuchtungssystem nach einem oder mehreren der vorherigen Ansprüche, wobei die Beleuchtungseinheit eine LED ist.

8. Beleuchtungssystem nach Anspruch 7, wobei die verwendeten LED farbiges Licht emittieren.

9. Beleuchtungssystem nach einem oder mehreren der vorherigen Ansprüche, wobei die LED mit der Elektroenergiequelle über eine Leiterplatte und Verbindungskabel verbunden sind.

10. Beleuchtungssystem nach Anspruch 9, wobei die LED auf der Leiterplatte eingelötet sind.

11. Beleuchtungssystem nach Anspruch 9, wobei ein Kondensator auf der Leiterplatte angebracht ist.

12. Beleuchtungssystem nach einem oder mehreren der vorherigen Ansprüche, wobei ein Diffusor in das Beleuchtungssystem integriert ist.

13. Verwendung eines Beleuchtungssystems nach einem oder mehreren der vorherigen Ansprüche zur Beleuchtung eines Fahrradlenkers.

14. Verwendung eines Beleuchtungssystems nach Anspruch 13, wobei ein elektrochemischer Energiespeicher mit dem Beleuchtungssystem verbunden ist.

15. Verwendung eines Beleuchtungssystems nach Anspruch 13, wobei ein Dynamo mit dem Beleuchtungssystem verbunden ist.

## Claims

1. Lighting system for a bicycle, comprising a grip piece and a grip head, whereby the grip piece can be attached to the outside ends of the handlebars and connected to the grip head via a screw joint, bayonet joint and/or form-fitting joint, and the grip head comprises a battery compartment and at least one switchable lighting unit which is supplied with electrical energy by an electrical power source.

2. Lighting system according to claim 1, whereby a switch is located in the grip head.

3. Lighting system according to claim 1 or 2, whereby the grip head and battery compartment are connected by means of a screw joint.

4. Lighting system according to claim 3, whereby a seal is used to make the screw joint between the battery compartment and grip head a watertight connection.

5. Lighting system according to one or more of the previous claims, with one, preferably two, and particularly preferably three integrated lighting units.

6. Lighting system according to one or more of the previous claims, whereby the lighting unit is surrounded by a protective cover.

7. Lighting system according to one or more of the previous claims, whereby the lighting unit is an LED.

8. Lighting system according to claim 7, whereby the LEDs used emit coloured light.

9. Lighting system according to one or more of the previous claims, whereby the LEDs are connected to the electrical power source via a circuit board and connecting cable.

10. Lighting system according to claim 9, whereby the LEDs are soldered onto the circuit board.

11. Lighting system according to claim 9, whereby a capacitor is mounted on the circuit board.

12. Lighting system according to one or more of the previous claims, whereby a diffuser is integrated into the lighting system.

13. Use of a lighting system according to one or more of the previous claims to light bicycle handlebars.

14. Use of a lighting system according to claim 13, whereby an electrochemical energy store is connected to the lighting system.

15. Use of a lighting system according to claim 13, whereby a dynamo is connected to the lighting system.

## Revendications

1. Système d'éclairage pour vélo, comprenant une poignée et une tête de poignée, la poignée étant installée sur une extrémité externe d'un guidon et étant reliée à la tête de poignée par le biais d'un assemblage vissé, d'un assemblage par baïonnette et/ou d'un assemblage à forme finale, et la tête de poignée comprenant un compartiment pour piles et au moins une unité d'éclairage commutable et l'unité d'éclairage étant alimentée par une source d'énergie électrique en énergie électrique.

2. Système d'éclairage selon la demande 1; un interrupteur étant installé dans la tête de poignée.

3. Système d'éclairage selon demande 1 ou 2, la tête de poignée et le compartiment pour piles étant reliés à l'aide d'un assemblage vissé.

4. Système d'éclairage selon demande 3, l'assemblage vissé entre le compartiment pour piles et la tête de poignée étant relié de manière étanche au moyen d'un joint.

5. Système d'éclairage selon une ou plusieurs demandes susmentionnées, dans lequel une unité d'éclairage, de préférence deux unités d'éclairage et prioritairement trois unités d'éclairage sont intégrées.

6. Système d'éclairage selon une ou plusieurs demandes susmentionnées, l'unité d'éclairage étant entourée d'un capot de protection.

7. Système d'éclairage selon une ou plusieurs demandes susmentionnées, l'unité d'éclairage étant une DEL.

8. Système d'éclairage selon la demande 7, les DEL utilisées émettant de la lumière de couleur.

9. Système d'éclairage selon une ou plusieurs demandes susmentionnées, la DEL étant reliée à la source d'énergie électrique par une carte imprimée et un câble de liaison.

10. Système d'éclairage selon la demande 9, la DEL étant brasée sur la carte imprimée.

11. Système d'éclairage selon la demande 9, le condensateur étant installé sur la carte imprimée.

12. Système d'éclairage selon une ou plusieurs demandes susmentionnées, un diffuseur étant intégré dans le système d'éclairage.

13. Utilisation d'un système d'éclairage selon une ou plusieurs demandes susmentionnées pour l'éclairage d'un guidon de vélo.

14. Utilisation d'un système d'éclairage selon la demande 13, un accumulateur électrochimique étant relié au système d'éclairage.

15. Utilisation d'un système d'éclairage selon la demande 13, une dynamo étant reliée au système d'éclairage.
